# EUROPEAN PATENT APPLICATION

(11) **EP 4 566 938 A1**
(43) Date of publication of application: **11.06.2025**
(21) Application number: 23850406.2
(22) Date of filing: 01.08.2023
(51) Int. Cl.: B63J 4/00, B63B 13/00, C02F 1/74, B01D 35/02, C02F 103/00, C02F 103/08

(54) **STERILE FILTRATION DEVICE PROVIDED WITH BUBBLE GENERATOR, AND SHIP BALLAST WATER TREATMENT SYSTEM USING SAME**

(30) Priority: 04.08.2022 KR 20220097094
(71) Applicant: S&Sys Co., Ltd., Hwaseong-si, Gyeonggi-do 18468 (KR)
(72) Inventor: KIM, Man Soo, Busan 48060 (KR)
(74) Representative: Schmitt-Nilson Schraud Waibel Wohlfrom Patentanwälte Partnerschaft mbB
(86) International application number: PCT/KR2023/011267
(87) International publication number: WO 2024/029905

(57) **Abstract**

The present invention provides a sterile filtration device that sterilizes and filters seawater flowing in from the outside. The sterile filtration device comprises: an air supply unit for supplying air; a bubble generator which injects air supplied from the air supply unit into the seawater and generates turbulence while dispersing the air in the seawater, thereby generating fine bubbles in the seawater; and a filter device that filters the seawater in which the fine bubbles have been generated and uses the fine bubbles to apply shock to living organisms in the seawater passing through the filtration holes, thereby exterminating the living organisms.

## Description

### Technical field

The present invention relates to a sterile filtration device provided with a bubble generator, and a ship ballast water treatment system using the same.

### Background art

In general, ships are equipped with ballast tanks storing ballast water to adjust the ship's balance and draft.

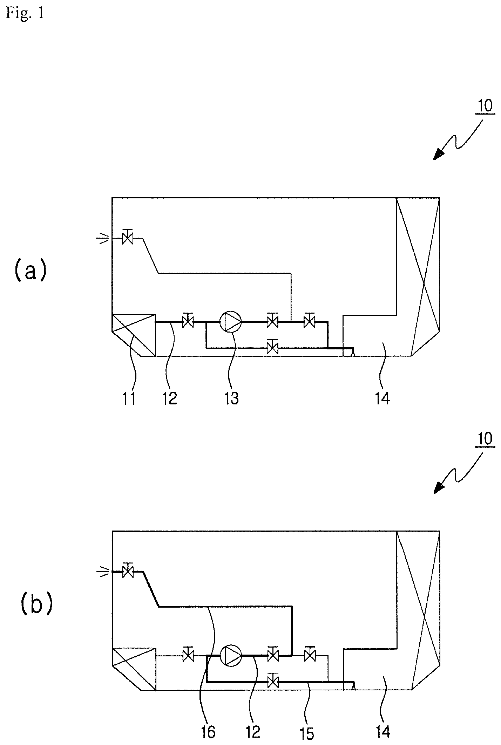

Fig. 1 shows a conventional ship.

Referring to Fig. 1, during a ballasting operation, a conventional ship 10 operates a ballast pump 13 provided on a seawater line 12 to supply seawater from a sea chest 11 to a ballast tank 14 through the seawater line 12.

During a deballasting operation, a front end of the seawater line 12 is blocked through a valve control, and a ballast pump 13 is operated to discharge ballast water discharged from a ballast tank 14 through a ballast water line 15 to the outside of the hull through a seawater line 12 and a discharge line 16.

In this way, a typical ship fills the ballast tank with seawater through a ballasting operation at the port before sailing, as needed, and discharges the ballast water stored in the ballast tank outside through a deballasting operation when arriving at the destination.

In this case, as for ships coming in from distant regions or overseas, when ballast water is directly discharged through a deballasting operation, foreign living organisms contained in the ballast water may disrupt the surrounding marine ecosystem and cause environmental damage.

### Summary of invention

### Technical task

It is an object of the present invention to provide a sterile filtration device provided with a bubble generator and a ship ballast water treatment system using the same, specifically, a sterile filtration device provided with a bubble generator capable of sterilizing and filtering seawater by exterminating living organisms in the seawater using fine bubbles generated through a bubble generator when filtering seawater, and a ship ballast water treatment system using the same.

The technical tasks to be achieved in the present invention are not limited to the technical tasks mentioned above, and other technical tasks not mentioned will be clearly understood by those of ordinary skill in the art to which the present invention belongs from the description below.

### Means for solving technical task

In order to solve the tasks described above, the present invention provides a sterile filtration device for sterilizing and filtering seawater flowing in from the outside, the sterile filtration device comprising: an air supply unit for supplying air, a bubble generator for injecting air supplied from the air supply unit into the seawater and generating turbulence while dispersing the air in the seawater, thereby generating fine bubbles in the seawater, and a filter device for filtering the seawater in which the fine bubbles have been generated through a filtration hole and using the fine bubbles to apply shock to living organisms in the seawater passing through the filtration hole, thereby exterminating the living organisms.

The present invention provides a sterile filtration device further comprising a steam supply unit for supplying steam to the bubble generator to promote the extermination of living organisms.

The present invention provides a sterile filtration device comprising a pipe member in which a flow path through which seawater passes is formed and an air inlet for injecting the air supplied from the air supply unit into the seawater is formed, a perforated plate installed on the flow path and having a plurality of dispersion holes formed therein, a first turbulence generator installed at the rear of the perforated plate on the flow path and having a first turbulence generation hole formed therein, and a second turbulence generator installed at the rear of the first turbulence generator on the flow path and having a second turbulence generation hole with a greater diameter than the first turbulence generation hole formed therein, wherein when seawater flows into the flow path, air is injected into the seawater through the air inlet, the air injected into the seawater is dispersed through a plurality of dispersion holes, and turbulence is generated through the first turbulence generation hole and the second turbulence generation hole to generate fine bubbles in the seawater.

The present invention provides a sterile filtration device wherein the perforated plate, the first turbulence generator and the second turbulence generator are each provided in a plurality of numbers according to the size of holes formed therein, and are formed to be replaceable in the pipe member so as to generate fine bubbles of a size corresponding to the filtration hole.

The present invention provides a sterile filtration device wherein the perforated plate, the first turbulence generator and the second turbulence generator each comprise an aperture so that the size of the dispersion hole, the first turbulence generation hole and the second turbulence generation hole is adjustably formed by the aperture so as to generate fine bubbles of a size corresponding to the filtration hole.

The present invention provides a sterile filtration device wherein the pipe member is formed of a plurality of pipes connected by mutual flanges, a protruding piece corresponding to each flange is formed in the perforated plate, the first turbulence generator and the second turbulence generator, a fastening hole bolt-fastened to the flange is formed in the protruding piece so that the perforated plate, the first turbulence generator and the second turbulence generator are respectively fastened to corresponding flanges between the plurality of pipes.

The present invention provides a sterile filtration device wherein the filtration hole is formed to have a width of 30 to 50 µm, the dispersion hole is formed to have a diameter of 15 to 20 mm, the first turbulence generation hole is formed as a hole shielding 40 to 60 % of the flow path in the pipe member, and the second turbulence generation hole is formed as a hole shielding 20 to 40 % of the flow path in the pipe member so as to form fine bubbles of a size corresponding to the filtration hole through the dispersion hole, the first turbulence generation hole and the second turbulence generation hole.

The present invention provides a sterile filtration device wherein the bubble generator generates fine bubbles of 1 to 100 µm so as to exterminate living organisms in the seawater by the shock or pressure caused by bubble rupture within a seawater line transporting seawater, a ballast tank into which seawater flows or a filter device.

The present invention provides a sterile filtration device wherein the filter device comprises a main body housing in which an inlet and an outlet are formed, a filter member formed with a plurality of filtration holes for filtering the seawater flowing in through the inlet and exterminating the seawater passing through the filtration holes using the fine bubbles in the seawater, and an air discharge valve for discharging the air accumulated in the main body housing due to the inflow of fine bubbles to the outside.

The present invention provides a sterile filtration device wherein a plurality of filter members are provided according to the size of the filtration hole and are detachably formed in the main body housing.

The present invention provides a sterile filtration device wherein an air layer is formed in the filter member by fine bubbles in the seawater when the seawater passes through a plurality of filtration holes, and foreign substances are piled up in the air layer in the process of filtering the foreign substances contained in the seawater, thereby alleviating the phenomenon of foreign substances being stuck in the filtration hole.

The present invention provides a sterile filtration device further comprising a backwashing unit provided inside the main body housing for backwashing the filter member.

The present invention provides a sterile filtration device comprising a first flow rate sensor provided on a connection line between the air supply unit and the bubble generator to detect a flow rate of the air supplied from the air supply unit to the bubble generator, and a first control valve provided at the rear of the first flow rate sensor on the connection line, wherein an opening/closing amount of the first control valve is adjusted using a flow rate value detected by the first flow rate sensor, thereby supplying the amount of air adjusted in response to the flow rate value to the bubble generator.

The present invention provides a sterile filtration device comprising a second flow rate sensor provided on a connection line between the steam supply unit and the bubble generator to detect a flow rate of the steam supplied from the steam supply unit to the bubble generator, and a second control valve provided at the rear of the second flow rate sensor on the connection line, wherein an opening/closing amount of the second control valve is adjusted using a flow rate value detected by the second flow rate sensor, thereby supplying the amount of air adjusted in response to the flow rate value to the bubble generator.

Meanwhile, in another aspect of the present invention for solving the problems described above, the present invention provides a ship ballast water treatment system for sterilizing and filtering seawater flowing in from the outside through a seawater inlet and supplying the same to the ballast tank, comprising a seawater line connected between the seawater inlet and ballast tank and provided with a ballast pump for transporting seawater, a bubble generator provided on the seawater line for generating fine bubbles in the seawater flowing in through the seawater line, an air supply unit for supplying the air for generating fine bubbles to the bubble generator, a filter device, provided on the seawater line, for filtering the seawater passing through the bubble generator, exterminating living organisms in the seawater using the fine bubbles, and discharging the same into the ballast tank, a ballast water line having one side thereof connected to the ballast tank and the other side thereof connected to a front end of the seawater line, a discharge line connected to a rear end of the seawater line for discharging the ballast water transported from the ballast tank to the outside through the ballast water line and seawater line during a deballasting operation, and a control unit for controlling a ballasting operation and a deballasting operation.

### Effect of invention

The sterile filtration device according to an embodiment of the present invention is capable of sterilizing and filtering seawater by allowing fine bubbles generated through the bubble generator to flow into the filter device and exterminating living organisms in the seawater using the fine bubbles when filtering seawater through the filter device.

In addition, by adjusting the size of dispersion holes and turbulence generation holes that generate fine bubbles within the bubble generator, fine bubbles of a size corresponding to the filtration hole of the filter member provided in the filter device may be generated, so that when filtering seawater through the filter member, living organisms in the seawater may easily collide with the fine bubbles in the process of passing through the filtration hole of the filter member together with the fine bubbles, thereby exterminating living organisms in the seawater.

Also, in the process of sterilizing and filtering seawater through the filter device, an air layer is formed in the filter member by the fine bubbles and foreign substances are piled up in the air layer, thereby effectively alleviating the phenomenon of foreign substances being stuck in the filter member, and easily removing the foreign substances piled up in the filter member when backwashing the filter member to increase backwashing efficiency.

Furthermore, the ship ballast water treatment system according to an embodiment of the present invention is capable of sterilizing and filtering seawater using a bubble generator and a filter device and then supplying the same to a ballast tank. Additionally, even during a deballasting operation, the ballast water discharged from the ballast tank may be re-sterilized and re-filtered using a bubble generator and a filter device and then discharged outside the hull, thereby effectively preventing ecosystem disturbance and environmental damage caused by the introduction of foreign living organisms into the sea area.

The effects obtainable in the present invention are not limited to the above-mentioned effects, and other effects not mentioned may be clearly understood by those of ordinary skill in the art to which the present invention pertains from the following description.

### Brief description of drawings

Fig. 1 illustrates a conventional ship;
Fig. 2 illustrates a sterile filtration device provided with a bubble generator according to an embodiment of the present invention;
Fig. 3 illustrates a detailed configuration of a bubble generator according to an embodiment of the present invention;
Fig. 4 illustrates a principle of exterminating living organisms by rupture of fine bubbles according to an embodiment of the present invention;
Fig. 5 illustrates the shape of a filter member according to an embodiment of the present invention;
Fig. 6 illustrates a state in which an air layer and foreign substances are piled up in the filter member according to an embodiment of the present invention;
Fig. 7 illustrates a sterile filtration device provided with a steam supply unit according to an embodiment of the present invention; and
Figs. 8 and 9 illustrate a configuration and an operating state of a ship ballast water treatment system according to an embodiment of the present invention.

### Best mode for carrying out the invention

Hereinafter, preferred embodiments according to the present invention will be described in detail with reference to the accompanying drawings.

The detailed description set forth below in conjunction with the accompanying drawings is intended to describe exemplary embodiments of the present invention and is not intended to represent the only embodiments in which the present invention may be carried out.

In order to clearly explain the present invention in the drawings, portions that are not related to the present invention are omitted, and like reference numerals are used to refer to like elements throughout the specification.

In an embodiment of the present invention, expressions such as "or" and "at least one" may indicate one of the words listed together, or a combination of two or more.

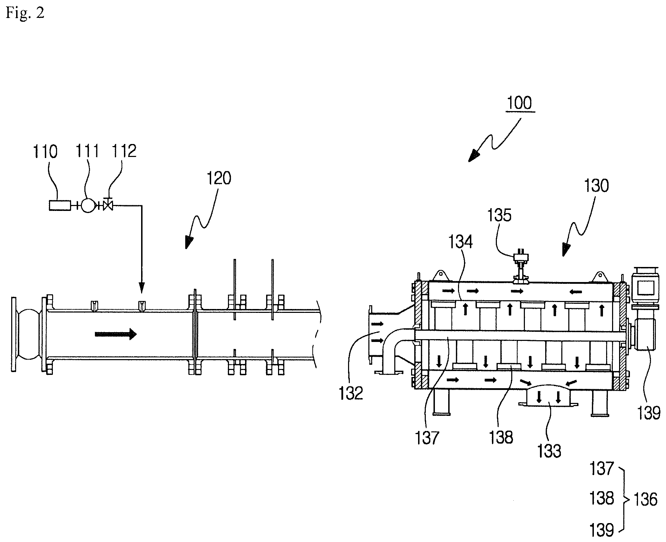

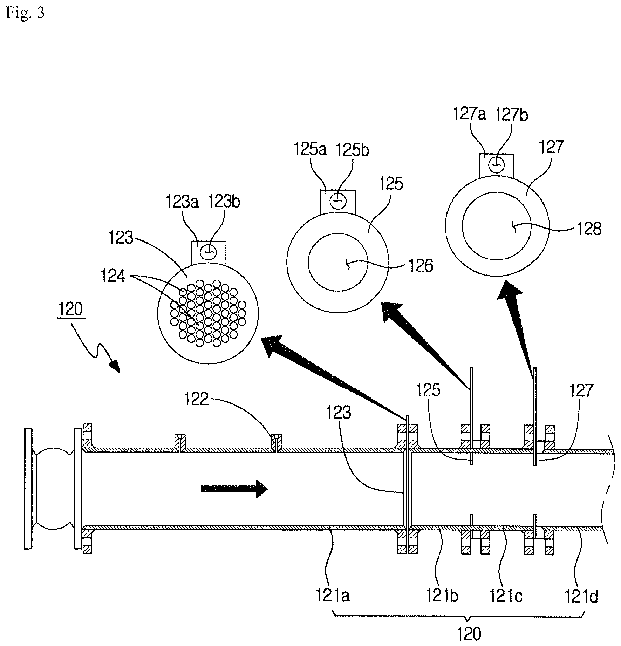

Fig. 2 illustrates a sterile filtration device 100 provided with a bubble generator 120 according to an embodiment of the present invention, and Fig. 3 illustrates a detailed configuration of a bubble generator 120 according to an embodiment of the present invention.

The sterile filtration device 100 provided with a bubble generator 120 according to an embodiment of the present invention is provided on a seawater line 220 connected to a ballast tank in a hull to sterilize and filter seawater (or fresh water) flowing through the seawater line 220, and is capable of exterminating living organisms contained in the seawater using fine bubbles generated through the bubble generator 120, and alleviating the phenomenon of foreign substances being stuck in the filter member 134 by the fine bubbles, thereby increasing cleaning efficiency when backwashing the filter member 134.

In particular, the bubble generator 120 may generate fine bubbles of a size corresponding to the filtration hole of the filter member 134 so that when filtering seawater, living organisms in the seawater may easily collide with the fine bubbles in the process of passing through the filtration hole of the filter member 134 together with the fine bubbles, thereby easily exterminating the living organisms in the seawater.

Referring to Figs. 2 and 3, the sterile filtration device 100 according to an embodiment of the present invention may comprise an air supply unit 110, a bubble generator 120, and a filter device 130.

The air supply unit 110 is connected to the bubble generator 120 and may supply air to the bubble generator 120.

A first flow rate sensor 111 is provided on a connection line between the air supply unit 110 and the bubble generator 120 to detect a flow rate of the air supplied to the bubble generator 120 through the first flow rate sensor 111.

A first control valve 112 is provided at the rear of the first flow rate sensor 111 on the connection line to control an opening/closing amount of the first control valve 112, thereby adjusting the amount of air supplied from the air supply unit 110 to the bubble generator 120.

In this case, by controlling the opening/closing amount of the first control valve 112 using a flow rate value detected by the first flow rate sensor 111, the amount of air adjusted in response to the flow rate value may be supplied to the bubble generator 120.

The bubble generator 120 may generate fine bubbles using air supplied from the air supply unit 110.

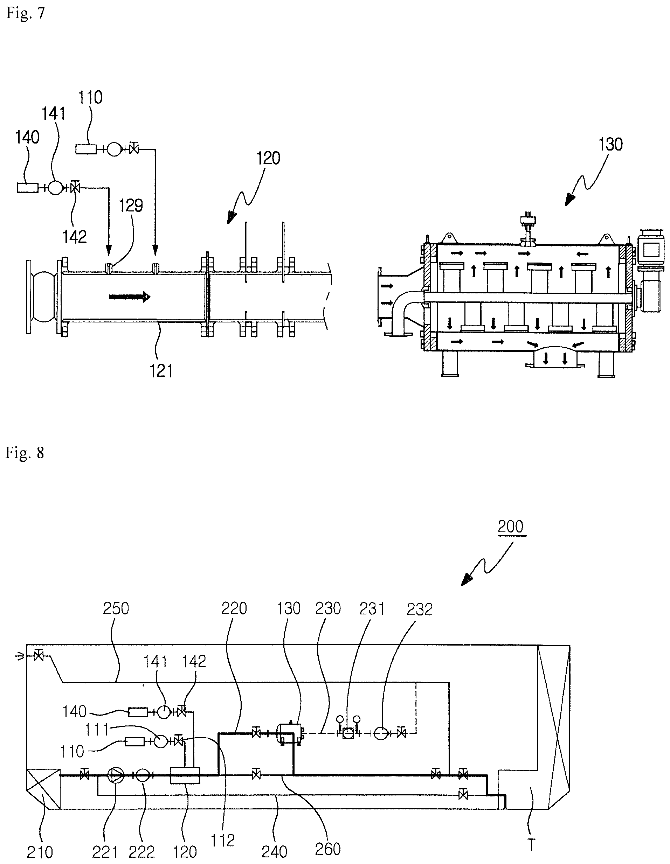

The bubble generator 120 may be connected to a front end of the filter device 130 or connected to the filter device 130 through a seawater line 220 (see Fig. 8) to supply fine bubbles to the filter device 130.

Here, the bubble generator 120 may generate fine bubbles of a size corresponding to the size of the filtration hole of the filter device 130, which will be described later. As an example, in the present embodiment, the bubble generator 120 generates fine bubbles of 1 to 100 µm, thereby generating fine bubbles corresponding to the size of a filtration hole of 30 to 50 µm.

Specifically, the bubble generator 120 according to the present embodiment may comprise a pipe member 121 in which a flow path through which seawater passes is formed and an air inlet 122 for injecting air into the flow path is formed, a perforated plate 123 installed on the flow path of the pipe member 121, a first turbulence generator 125 disposed at the rear of the perforated plate 123 on the flow path of the pipe member 121, and a second turbulence generator 127 disposed at the rear of the first turbulence generator 125 on the flow path of the pipe member 121.

Here, the pipe member 121 is in the form of a pipe with open front and rear ends, and is connected to a seawater line 220 (see Fig. 8) through which seawater flows, allowing the seawater flowing in through the seawater line 220 (see Fig. 8) to pass through the inner flow path.

In this case, an air inlet 122 connected to the air supply unit 110 is formed at a front end side of the pipe member 121, allowing the air supplied from the air supply unit 110 to flow into the inner flow path through the air inlet 122.

A perforated plate 123 may be formed as a plate body with a plurality of dispersion holes, and may be installed on the flow path of the pipe member 121 to disperse the air flowing in together with seawater.

In other words, the perforated plate 123 is installed in such a way to block the flow path of the pipe member 121 so that the seawater flowing into the inner flow path through the front end of the pipe member 121 passes through a plurality of dispersion holes 124 formed in the perforated plate 123 together with the air injected into the air inlet 122. In this process, the plurality of dispersion holes 124 formed in the perforated plate 123 may disperse the air contained in the seawater in the form of bubbles.

In addition, a first turbulence generator 125 may be formed as a plate body with a first turbulence generation hole 126 in the center, and a second turbulence generator 127 may be formed as a plate body with a second turbulence generation hole 128 having a larger diameter than the first turbulence generation hole 126 in the center.

In this case, the first turbulence generator 125 and the second turbulence generator 127 are also installed in such a way to block the flow path of the pipe member 121. The first turbulence generator 125 may be installed at the rear of the perforated plate 123 on the flow path of the pipe member 121, and the second turbulence generator 127 may be installed at the rear of the first turbulence generator 125 on the flow path of the pipe member 121.

Accordingly, seawater flowing into the inner flow path through the front end of the pipe member 121 passes through the perforated plate 123 together with the air injected into the air inlet 122, causing the air contained in the seawater to be dispersed in the form of bubbles. Then, by passing through the first and second turbulence generation holes 126, 128 generating turbulence, fine bubbles in the seawater may be generated by the generation of turbulence.

In this case, the fine bubbles generated by the bubble generator 120 may flow into the filter device 130 and be used to exterminate the living organisms contained in the seawater.

As an example, each dispersion hole 124 formed in the perforated plate 123 may be formed to have a diameter of approximately 15 to 20 mm, the first turbulence generation hole 126 formed in the first turbulence generator 125 may be formed as a hole shielding 40 to 60 % of the flow path within the pipe member 121, the second turbulence generation hole 128 formed in the second turbulence generator 127 may be formed as a hole shielding 20 to 40 % of the flow path within the pipe member 121, and fine bubbles of 1 to 100 µm may be generated through the dispersion hole 124, the first turbulence generation hole 126 and the second turbulence generation hole 128.

In this case, fine bubbles of a size corresponding to the filtration hole of 30 to 50 µm of the filter device 130 may be generated, which will be described later.

In addition, a perforated plate 123, a first turbulence generator 125 and a second turbulence generator 127 may be detachably provided on the pipe member 121.

Accordingly, as an example, a plurality of perforated plates 123 having different diameters of dispersion holes 124, a plurality of turbulence generators 125 having different diameters of first turbulence generation holes 126, and a plurality of second turbulence generators 127 having different diameters of second turbulence generation holes 128 are provided. When the size of the filtration hole of the filter device 130 is changed, the perforated plate 123, the first turbulence generator 125 and the second turbulence generator 127 may be selectively replaced so as to generate fine bubbles corresponding to the changed filtration hole size.

As another example, the dispersion hole 124 of the perforated plate 123, the first turbulence generation hole 126 of the first turbulence generator 125, and the second turbulence generation hole 128 of the second turbulence generator 127 may be formed adjustably in size by applying an aperture structure, etc. When the size of the filtration hole of the filter device 130 is changed, the sizes of the dispersion hole 124, the first turbulence generation hole 126 and the second turbulence generation hole 128 may be selectively adjusted so as to generate fine bubbles corresponding to the changed filtration hole size.

Also, referring to Fig. 3, when installing a perforated plate 123, a first turbulence generator 125 and a second turbulence generator 127 in a pipe member 121, as an example, the pipe member 121 may be formed as a first pipe 121a, a second pipe 121b, a third pipe 121c and a fourth pipe 121d connected by mutual flanges. Additionally, a perforated plate 123 may be installed between the flanges of the first pipe 121a and the second pipe 121b, a first turbulence generator 125 may be installed between the flanges of the second pipe 121b and the third pipe 121c, and a second turbulence generator 127 may be installed between the flanges of the third pipe 121c and the fourth pipe 121d.

In this case, protruding pieces 123a, 125a, 127a that fit correspondingly between the flanges of the pipe are formed in the perforated plate 123, the first turbulence generator 125, and the second turbulence generator 127, and fastening holes 123b, 125b, 127b are formed in the protruding pieces 123a, 125a, 127a allowing bolts fastening the flanges to pass therethrough, so that the protruding pieces 123a, 125a, 127a may be fastened between the flanges of the pipe.

Meanwhile, referring to Fig. 2, the filter device 130 may sterilize and filter seawater flowing in through the bubble generator 120.

Specifically, the filter device 130 according to the present embodiment may comprise a main body housing 131 in which an inlet 132 and an outlet 133 are formed, a filter member 134 for sterilizing and filtering seawater flowing in through the inlet 132, an air discharge valve 135 for discharging air flowing into the main body housing 131, and a backwashing unit 136 for backwashing the filter member 134.

Here, the main body housing 131 may be formed in a cylindrical shape, an inlet 132 through which the seawater passes the bubble generator 120 may be formed at one side thereof, and an outlet 133 through which the seawater sterilized and filtered by the filter member 134 is discharged may be formed at the other side thereof.

As an example, the main body housing 131 according to the present embodiment may have an inlet 132 formed at the front end, and an outlet 133 formed at the bottom.

In addition, the filter member 134 may be formed in the form of a pipe with an open front end, and a plurality of filtration holes may be formed on an outer circumferential surface so as to filter and discharge the seawater flowing in through the open front end.

As an example, the outer circumferential surface of the filter member 134 may be formed as a grid-shaped net, and a filtration hole may be formed between the nets. Also, the filtration hole may be formed to have a width of 30 to 50 µm so as to effectively filter various foreign substances in the seawater.

In this case, the filter member 134 may be replaceably provided in the main body housing 131, so as to be replaced with a filter member having a filtration hole having a different size from the filtration hole described above according to the type of foreign substances.

The filter member 134 may be arranged horizontally along the center of the inside of the main body housing 131, and may have an open front end connected to the inlet 132 of the main body housing 131, thereby allowing seawater flowing into the inlet 132 to move to the inside of the filter member 134.

In this case, the seawater flowing into the inside of the filter member 134 and passing through the filtration hole on the outer circumferential surface may flow along an inner edge of the main body housing 131 and be discharged to an outlet 133 at the bottom of the main body housing 131.

In the process of sterilizing and filtering seawater through the filter member 134, as the seawater containing fine bubbles flows into the inside of the filter member 134 by the bubble generator 120 through an inlet 132 of the main body housing 131, the seawater flowing in passes through the filtration hole of the filter member 134. Foreign substances in the seawater may be filtered out by the filtration hole, and living organisms in the seawater may be exterminated by colliding with the fine bubbles in the process of passing through the filtration hole together with the fine bubbles.

In this case, since the fine bubbles generated by the bubble generator 120 are formed in a size corresponding to the filtration hole of the filter member 134, when the fine bubbles pass through the filtration hole of the filter member 134, they may easily collide with the living organisms flowing into the filtration hole, and the living organisms may be exterminated by the impact of the fine bubbles.

In other words, this is how the impact of fine bubbles exterminates living organisms by destroying surface cell walls of the living organisms.

Living organisms in seawater may also be exterminated by the shock caused by the rupture of fine bubbles.

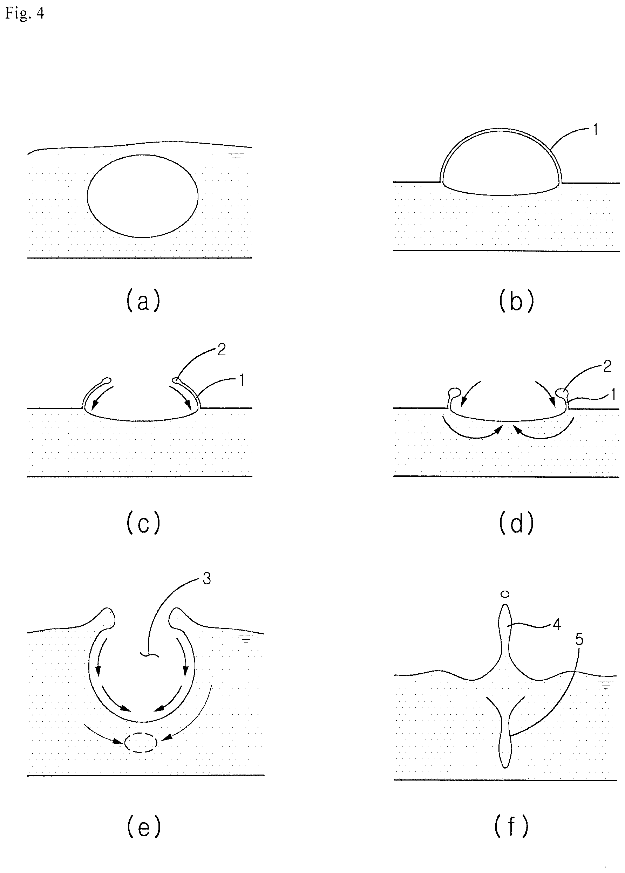

As an example, fine bubbles generated by the bubble generator 120 may be ruptured while flowing inside the seawater line 220 (see Fig. 8) and the filter device 130, or after flowing into the ballast tank. The rupture impact of the fine bubbles may exterminate surrounding living organisms, as will be described in more detail later with reference to Fig. 4.

In addition, an air discharge valve 135 may be provided at an upper part of the main body housing 131.

In other words, the fine bubbles that pass through the filter member 134 accumulate as air at an upper part of the main body housing 131 due to the difference in specific gravity, and accordingly, the accumulated air may be discharged to the outside using the air discharge valve 135.

Furthermore, the backwashing unit 136 may comprise a rotating pipe 137 installed along the inner center of the filter member 134, a suction member 138 provided in plural numbers along the longitudinal direction of the rotating pipe 137, and sucking foreign substances attached to an inner side surface of the filter member 134 into the rotating pipe 137, and a motor unit 139 rotating the rotating pipe 137.

Here, a backwashing pipe (not shown) that provides a suction force may be connected to the rotating pipe 137 so that the suction member 138 can suck the foreign substances.

Such backwashing unit 136 performs backwashing of the filter member 134 by rotating the rotating pipe 137 through the motor unit 139, so that a plurality of suction members 138 provided on the rotating pipe 137 can rotate the rotating pipe 137 axially to collectively suck the foreign substances attached to an inner side surface of the filter member 134 and allow them to flow into the rotating pipe 137 together with seawater, and the foreign substances flowing into the rotating pipe 137 may be discharged through a discharge line 250 (see Fig. 8).

Fig. 4 illustrates a principle of exterminating living organisms by rupture of fine bubbles according to an embodiment of the present invention.

In the present embodiment, the bubble generator 120 may generate fine bubbles having a size of 1 to 100 µm. Among the generated fine bubbles, fine bubbles of a size corresponding to the filtration hole (e.g., 30 to 50 µm) of the filter member 134 may collide with living organisms in the seawater while passing through the filtration hole of the filter member 134 to exterminate the same.

In addition, the fine bubbles generated by the bubble generator 120 may exterminate the surrounding living organisms while flowing inside the seawater line 220 (see Fig. 8) and filter device 130, or after flowing into the ballast bank and being ruptured.

Specifically, referring to Fig. 4, the fine bubbles generated by the bubble generator 120 rise to the water surface by buoyancy, forming a hemispherical shape surrounded by a membrane 1 at the water surface, and as the membrane 1 thins due to gravity and capillary forces, a rim 2 may be formed when the wave heating of the membrane 1 begins.

Also, as the rim 2 and membrane 1 are drawn to the water surface by surface tension, water accumulates inside the rim 2 and membrane 1, increasing the volume. Additionally, as the rim 2 moves symmetrically, the moving rim 2 may meet and collide at one point at a lower part of the cavity 3, generating a high pressure.

The high pressure generated in this way may push the surrounding fluid to generate a fluid jet 4 and a submerged jet 5.

In this process, the surrounding living organisms may be effectively exterminated by the collision or pressure generated by the kinetic energy of the rim 2, and effects of exterminating living organisms may be excellent when the size of the fine bubble is 100 µm or less.

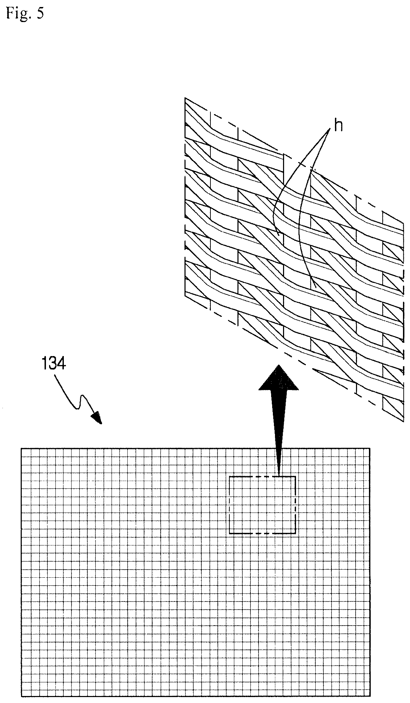

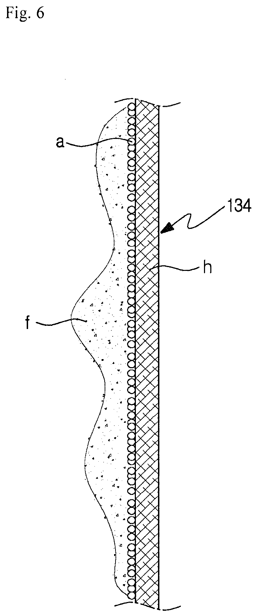

Fig. 5 illustrates the shape of a filter member 134 according to an embodiment of the present invention, and Fig. 6 illustrates a state in which an air layer a and foreign substances f are piled up in the filter member 134 according to an embodiment of the present invention.

Referring to Figs. 5 and 6, the filter member 134 according to the present embodiment may be formed as a zig-zagged woven net.

In the filter member 134, when seawater passes through the filtration hole h, an air layer a may be formed in the filter member 134 by the fine bubbles contained in the seawater, and the foreign substances contained in the seawater may be piled up in the air layer a, thereby alleviating the phenomenon of foreign substances f being stuck in the filtration hole h.

Additionally, as the phenomenon of foreign substances being stuck is alleviated by the air layer a of the filter member 134, when backwashing the filter member 134, the foreign substances f piled up in the filter member 134 may be easily removed, thereby enabling the filter member 134 to be cleanly washed.

As such, the sterile filtration device 100 according to the present embodiment generates fine bubbles through the bubble generator 120 and flows the same into the filter device 130, thereby effectively exterminating living organisms contained in the seawater using fine bubbles when filtering seawater through the filter member 134 inside the filter device 130. Additionally, the fine bubbles may form an air layer a in the filter member 134 to alleviate the phenomenon of foreign substances f being stuck, thereby greatly increasing cleaning efficiency when backwashing the filter member 134.

Meanwhile, the sterile filtration device 100 according to the present embodiment may further comprise a steam supply unit 140.

Fig. 7 illustrates a sterile filtration device 100 provided with a steam supply unit 140 according to an embodiment of the present invention.

Referring to Fig, 7, a steam inlet 129 through which high-temperature steam supplied from the steam supply unit 140 is injected may be further formed in the pipe member 121 of the bubble generator 120.

In addition, a second flow rate sensor 141 may be provided in the connection line between the steam supply unit 140 and bubble generator 120 to detect the flow rate of steam supplied to the bubble generator 120 through the second flow rate sensor 141.

Also, a second control valve 142 may be provided at the rear of the second flow rate sensor 141 on the connection line to adjust the amount of steam supplied from the steam supply unit 140 to the bubble generator 120 by controlling the opening/closing amount of the second control valve 142.

In this case, by controlling the opening/closing amount of the second control valve 142 using the flow rate value detected by the second flow rate sensor 141, the amount of steam adjusted in response to the flow rate value may be supplied to the bubble generator 120.

The high-temperature steam supplied from the steam supply unit 140 may be injected into the pipe member 121 of the bubble generator 120 and flow into the filter device 130 together with fine bubbles generated by the bubble generator 120. Additionally, in the filter device 130, in the process of exterminating living organisms in seawater through the bubbles, the high-temperature steam may flow in simultaneously to promote the extermination of living organisms.

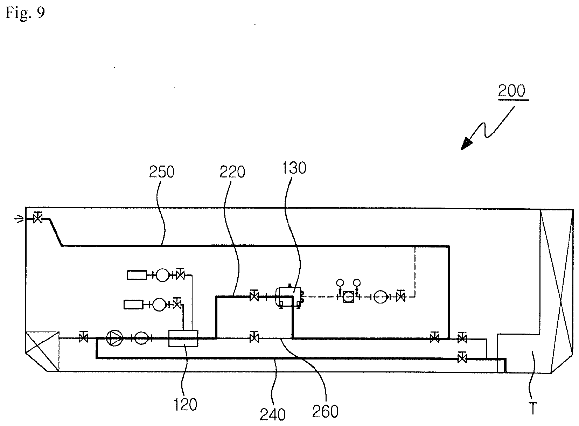

Meanwhile, Figs. 8 and 9 illustrate a configuration and an operating state of a ship ballast water treatment system 200 according to an embodiment of the present invention.

Referring to Figs. 8 and 9, a ship ballast water treatment system 200 according to an embodiment of the present invention may comprise a seawater inlet 210, a seawater line 220, a bubble generator 120, a filter device 130, a backwashing line 230, a ballast water line 240, a discharge line 250, and a control unit (not shown).

Here, the seawater inlet 210 may be formed as a sea chest through which the seawater enters and exists the hull, and the seawater flowing in from the seawater inlet 210 may pass through the bubble generator 120 and filter device 130 and be transported to the ballast tank T through the seawater line 220.

Also, a ballast pump 221 and a flow meter 222 may be provided in the front of the bubble generator 120 on the seawater line 220.

An air supply unit 110 may be connected to the bubble generator 120, and selectively, a steam supply unit 140 may be connected thereto.

Furthermore, in the connection line connecting the bubble generator 120 and air supply unit 110, a first flow rate sensor 111 and a first control valve 112 may be provided. Additionally, in the connection line connecting the bubble generator 120 and the steam supply unit 140, a second flow rate sensor 141 and a second control valve 142 may be provided.

A backwashing line 230 may be connected to a part where washing water is discharged from the filter device 130, and the backwashing line 230 may be connected to the discharge line 250 for discharging seawater from the hull.

Here, a backwashing pump 231 and a flow meter 232 may be provided on the backwashing line 230.

In addition, a bypass line 260 for bypassing the filter device 130 may be connected on the seawater line 220, so that, selectively, the seawater passing through the bubble generator 120 may bypass the filter device 130 and be transported through the bypass line 260.

In the ballast tank T, a ballast water line 240 for discharging ballast water may be connected during a deballasting operation, and the ballast water line 240 may be connected to the front end of the seawater line 220.

Also, a discharge line 250 may be connected at a rear end of the seawater line 220, so that the ballast water transported from the ballast tank T through the ballast water line 240 and seawater line 220 may be discharged outside the hull through the discharge line 250 during a deballasting operation.

A control unit (not shown) may control ballasting operation and deballasting operation.

Specifically, referring to Fig. 8, the control unit (not shown) may operate the ballast pump during a ballasting operation to transport seawater from the seawater inlet 210 to the bubble generator 120 through the seawater line 220.

At the same time, the air supply unit 110 may be operated to supply air for generating fine bubbles to the bubble generator 120. Optionally, the air supply unit 110 and the steam supply unit 140 may be operated simultaneously to supply air and steam to the bubble generator 120.

Then, seawater containing fine bubbles may be transported to the filter device 130 through the seawater line 220 while passing through the bubble generator 120, and the filter device 130 may filter foreign substances contained in the seawater and exterminate living organisms contained in the seawater using the fine bubbles at the same time.

In this case, in case of operating the air supply unit 110 and steam supply unit 140 at the same time, as seawater containing fine bubbles and steam is transported to the filter device 130 while passing through the bubble generator 120, high-temperature steam may promote the extermination of the living organisms when exterminating living organisms using the fine bubbles.

Next, the seawater sterilized and filtered by the filter device 130 may be supplied to the ballast tank T through a rear end of the seawater line 220.

In the process of sterilizing and filtering seawater by the filter device 130, backwashing the inside of the filter device 130 may be performed at the same time. The washing water discharged after cleaning the inside of the filter device 130 is sterilized washing water, and may be discharged outside the hull through the backwashing line 230 and discharge line 250 by a backwashing pump 231.

In the above-described ballasting operation process, the control unit (not shown) uses the flow rate of inflow seawater detected through the flow meter 222 provided on the seawater line 220, the injected amount of air detected through the first flow rate sensor 111 of the air supply unit 110 or the injected amount of steam detected through the second flow rate sensor 141 of the steam supply unit 140, etc. to analyze and predict the degree of extermination of living organisms by fine bubbles within the filter device 130, and accumulate and store the analyzed and predicted information in internal database.

Accordingly, based on the information accumulated in the database, the amount of air or amount of steam supplied to the bubble generator 120 may be adjusted in response to the inflow amount of seawater.

In addition, the control unit (not shown) may detect the flow rate of washing water discharged from the filter device 130 through the flow meter 232 provided on the backwashing line 230 to calculate the flow rate of seawater supplied from the filter device 130 to the ballast tank T through the seawater line 220 in real time.

Referring to Fig. 9, during a deballasting operation, the control unit (not shown) may block a front inlet side of the seawater line 220 through the valve control, and operate the ballast pump 221 to allow the ballast water discharged from the ballast tank T to flow into the seawater line 220 through the ballast water line 240.

In addition, the ballast water flowing into the seawater line 220 may pass through the bubble generator 120 to be transported to the filter device 130 in a state containing fine bubbles or fine bubbles and steam. Also, the filter device 130 may discharge the ballast water after re-sterilizing and re-filtering the same, and the discharged ballast water may be discharged outside the hull through the discharge line 250.

In this case, by blocking a rear end of the seawater line 220 connected to the ballast tank T through the valve control, the ballast water transported from the filter device 130 to the seawater line 220 may flow into the discharge line 250.

In the present embodiment, during a ballasting operation, seawater may be supplied to the ballast tank T after sterilizing and filtering the same by using the bubble generator 120 and the filter device 130. Additionally, even during a deballasting operation, the ballast water discharged from the ballast tank T using the bubble generator 120 and filter device 130 may be re-sterilized and re-filtered and then discharged outside the hull, thereby effectively preventing ecosystem disturbance and environmental damage caused by the introduction of foreign living organisms into the sea area.

Meanwhile, in the above-described embodiment, during the deballasting operation, the ballast water discharged from the ballast tank T using the bubble generator 120 and filter device 130 is discharged after re-sterilizing and re-filtering the same. However, if it is not necessary to re-sterilize and re-filter the ballast water, the ballast water discharged from the ballast tank T may be discharged outside bypassing the filter device 130 through the bypass line 260.

In addition, the ship ballast water treatment system 200 according to the present embodiment described above explains an example of exterminating living organisms in the seawater using fine bubbles or steam. However, it is obvious that the system may further comprise a UV sterilizer, an electrolyzer that generates hypochlorous acid, and a disinfectant injector.

As described above, the sterile filtration device 100 according to an embodiment of the present invention may allow fine bubbles generated through the bubble generator 120 to flow into the filter device 130, thereby, when filtering the seawater through the filter device 130, exterminating living organisms in the seawater using fine bubbles, and sterilizing and filtering the seawater.

Furthermore, by adjusting the sizes of the dispersion hole 124 and the turbulence generation holes 126, 128 that generate fine bubbles within the bubble generator 120, fine bubbles of a size corresponding to the filtration hole h of the filter member 134 provided within the filter device 130 may be generated. Accordingly, when filtering seawater through the filter member 134, living organisms in the seawater may easily collide with the fine bubbles when passing through the filtration hole h of the filter member 134 together with the fine bubbles, and living organisms in the seawater may be easily exterminated.

Also, in the process of sterilizing and filtering seawater through the filter device 130, an air layer a may be formed in the filter member 134 by the fine bubbles, and foreign substances f may be piled up in the air layer a, thereby alleviating the phenomenon of foreign substances f being stuck in the filter member 134. Accordingly, when backwashing the filter member 134, foreign substances piled up in the filter member 134 may be easily removed, thereby increasing backwashing efficiency.

In addition, the ship ballast water treatment system 200 according to an embodiment of the present invention may supply seawater to the ballast tank T after re-sterilizing and re-filtering the same using the bubble generator 120 and filter device 130. Also, even during a deballasting operation, the ballast water discharged from the ballast tank T may be discharged outside the hull after re-sterilizing and re-filtering the same using the bubble generator 120 and filter device 130, thereby effectively preventing ecosystem disturbance and environmental damage caused by the introduction of foreign living organisms in the sea area.

The embodiments of the present invention disclosed in the present specification and drawings are merely illustrative examples of the present invention to easily explain the technical disclosure of the present invention and facilitate understanding of the present invention, and are not intended to limit the scope of the present invention.

Accordingly, in addition to the embodiments disclosed above, all modifications or changes derived based on the technical idea of the present invention should be construed as being included in the scope of the present invention.

## Claims

1. A sterile filtration device for sterilizing and filtering seawater flowing in from an outside, comprising:
an air supply unit configured to supply air;
a bubble generator configured to generate fine bubbles in the seawater by injecting the air supplied from the air supply unit into the seawater and generating turbulence while dispersing the air in the seawater; and
a filter device configured to filter the seawater including the fine bubbles generated and configured to exterminate living organisms by applying shock to the living organisms in the seawater passing through a filtration hole using the fine bubbles generated,
wherein the bubble generator is configured to induce collision between the fine bubbles the living organisms in the seawater passing through the filtration hole by generating fine bubbles of a size corresponding to the filtration hole, when the filter device filters the seawater.

2. The sterile filtration device of claim 1, further comprising:
a steam supply unit configured to supply steam to the bubble generator to promote extermination of the living organisms.

3. The sterile filtration device of claim 1, wherein the bubble generator, comprises:
a pipe member in which a flow path through which seawater passes is formed and an air inlet for injecting the air supplied from the air supply unit into the seawater is formed;
a perforated plate installed on the flow path and having a plurality of dispersion holes formed therein;
a first turbulence generator installed at the rear of the perforated plate on the flow path and having a first turbulence generation hole formed therein; and
a second turbulence generator installed at the rear of the first turbulence generator on the flow path and having a second turbulence generation hole with a greater diameter than the first turbulence generation hole formed therein,
wherein the fine bubbles in the seawater are generated by infecting the air into the seawater through the air inlet, dispersing the air injected into the seawater through a plurality of dispersion holes and generating turbulence through the first turbulence generation hole and the second turbulence generation hole, when the seawater flows into the flow path.

4. The sterile filtration device of claim 3, wherein the perforated plate, the first turbulence generator and the second turbulence generator are each provided in a plurality of numbers according to the size of holes formed therein, and are formed to be replaceable in the pipe member to generate the fine bubbles of the size corresponding to the filtration hole.

5. The sterile filtration device of claim 3, wherein the perforated plate, the first turbulence generator and the second turbulence generator each include an aperture so that the size of the dispersion hole, the first turbulence generation hole and the second turbulence generation hole is adjustably formed by the aperture to generate the fine bubbles of the size corresponding to the filtration hole.

6. The sterile filtration device of claim 1, wherein the bubble generator is configured to generate fine bubbles of 1 to 100 µm to exterminate the living organisms in the seawater by the shock or pressure caused by bubble rupture within a seawater line transporting seawater, a ballast tank into which seawater flows or a filter device.

7. The sterile filtration device of claim 1, wherein the filter device, comprises:
a main body housing configured to have an inlet and an outlet;
a filter member configured to have a plurality of filtration holes for filtering the seawater flowing in through the inlet and exterminate the seawater passing through the filtration holes using the fine bubbles in the seawater; and
an air discharge valve configured to discharge the air accumulated in the main body housing due to an inflow of fine bubbles to the outside.

8. The sterile filtration device of claim 7, wherein the filter members are provided according to the size of the filtration hole and are detachably formed in the main body housing.

9. The sterile filtration device of claim 7, wherein an air layer is formed in the filter member by fine bubbles in the seawater when the seawater passes through a plurality of filtration holes, and foreign substances are piled up in the air layer in the process of filtering the foreign substances contained in the seawater, thereby alleviating the phenomenon of foreign substances being stuck in the filtration hole.

10. The sterile filtration device of claim 1, comprising:
a first flow rate sensor provided on a connection line between the air supply unit and the bubble generator to detect a flow rate of the air supplied from the air supply unit to the bubble generator; and
a first control valve provided at the rear of the first flow rate sensor on the connection line,
wherein an opening/closing amount of the first control valve is adjusted using a flow rate value detected by the first flow rate sensor, thereby supplying the amount of air adjusted in response to the flow rate value to the bubble generator.

11. The sterile filtration device of claim 2, comprising:
a second flow rate sensor provided on a connection line between the steam supply unit and the bubble generator to detect a flow rate of the steam supplied from the steam supply unit to the bubble generator; and
a second control valve provided at the rear of the second flow rate sensor on the connection line,
wherein an opening/closing amount of the second control valve is adjusted using a flow rate value detected by the second flow rate sensor, thereby supplying the amount of steam adjusted in response to the flow rate value to the bubble generator.

12. A ship ballast water treatment system for sterilizing and filtering seawater flowing in from an outside through a seawater inlet and supplying the seawater sterilized and filtered to a ballast tank, comprising:
a seawater line connected between the seawater inlet and the ballast tank and provided with a ballast pump for transporting the seawater;
a bubble generator provided on the seawater line for generating fine bubbles in the seawater flowing in through the seawater line;
an air supply unit configured to supply the air for generating the fine bubbles to the bubble generator; and
a filter device, provided on the seawater line, configured to filter the seawater including the fine bubbles generated and configured to exterminate living organisms by applying shock to the living organisms in the seawater passing through a filtration hole using the fine bubbles generated, and configured to discharge the seawater into the ballast tank,
wherein the bubble generator is configured to induce collision between the fine bubbles the living organisms in the seawater passing through the filtration hole by generating fine bubbles of a size corresponding to the filtration hole, when the filter device filters the seawater.

13. The ship ballast water treatment system of claim 12, further comprising:
a flow meter, provided on the seawater line, configured to detect a flow rate of the seawater flowing in from the seawater inlet;
a first flow rate sensor configured to detect the amount of the air supplied from the air supply unit to the bubble generator; and
a control unit configured to use the flow rate of the seawater detected through the flow meter, and the amount of air detected through the first flow rate sensor to analyze the degree of extermination of the living organisms by the fine bubbles within the filter device, and configured to accumulate and store the analyzed data, and configured to adjust the amount of the air corresponding to the flow rate of the inflow seawater based on the accumulated data.

14. The ship ballast water treatment system of claim 13, further comprising:
a steam supply unit configured to supply steam to the bubble generator; and
a second flow rate sensor configured to detect an amount of the steam supplied from the steam supply unit to the bubble generator,
wherein the control unit, when operating the steam supply unit, uses the flow rate of the seawater detected through the flow meter, the amount of the air detected through the first flow rate sensor and the amount of the steam detected through the second flow rate sensor to analyze the degree of extermination of the living organisms within the filter device, and accumulates and stores an analyzed data, and adjusts the amount of air and the amount of steam corresponding to the flow rate of the inflow seawater based on the accumulated data.
